Europäisches Patentamt

European Patent Office

Office européen des brevets

(19)

(11) Veröffentlichungsnummer: **0 167 890**

**A2**

(12) **EUROPÄISCHE PATENTANMELDUNG**

(21) Anmeldenummer: 85107520.0

(22) Anmeldetag: 18.06.85

(51) Int. Cl.⁴: **C 08 K 9/12**
//(C08K9/12, 3:22, 5:00)

(30) Priorität: 30.06.84 DE 3424147

(43) Veröffentlichungstag der Anmeldung:
15.01.86 Patentblatt 86/3

(84) Benannte Vertragsstaaten:
DE FR GB IT NL

(71) Anmelder: BAYER AG
Konzernverwaltung RP Patentabteilung
D-5090 Leverkusen 1 Bayerwerk(DE)

(72) Erfinder: Fuhr, Karl, Dr.
Krüllsdyk 55
D-4150 Krefeld 1(DE)

(72) Erfinder: Müller, Friedemann, Dr.
Am Steinacker 5
D-4040 Neuss 21(DE)

(72) Erfinder: Eicher, Theobald, Dr.
Eschenweg 5
D-4047 Dormagen 1(DE)

(54) **Metalloxide auf organischem, halogenhaltigem Träger als Flammschutzmittel.**

(57) Flammschutzadditive für Kunststoffe bestehend aus einem Überzugs- und Trägermaterial. Der Überzug besteht aus Metalloxiden, der Träger aus organischen Verbindungen, in denen Halogen an Kohlenstoff gebunden ist. Die Kombination beider Bestandteile der Flammschutzadditive greift hemmend in das Brandgeschehen ein und gibt erfindungsgemäß Kunststoffen einen effektiven Brandschutz, z.B. V-2 bis V-O nach UL 94.

EP 0 167 890 A2

BAYER AKTIENGESELLSCHAFT 5090 Leverkusen, Bayerwerk

Konzernverwaltung RP
Patentabteilung G/Kü-c

Metalloxide auf organischem, halogenhaltigem Träger
als Flammschutzmittel

Die Erfindung betrifft neuartige Flammschutzadditive für Kunststoffe. Diese Flammschutzmittel bestehen aus einem Überzugs- und einem Trägermaterial. Der Überzug besteht aus Metalloxiden, der Träger aus organischen Verbindungen, in denen Halogen an Kohlenstoff gebunden ist. Die Kombination beider Bestandteile der Flammschutzadditive greift hemmend in das Brandgeschehen ein und gibt erfindungsgemäß Kunststoffen einen effektiven Brandschutz, z.B. V-2 bis V-0 nach UL 94.

Die Kunststoffe können dabei weitere Additive enthalten, auch solche, die den Brandablauf beeinflussen, z.B. gleiche oder andere Metall-, Halogen- und/oder Phosphorverbindungen.

Es ist bekannt, Kunststoffen zur Verminderung ihrer Brennbarkeit halogenhaltige Flammschutzmittel, insbesondere organische Brom- und/oder Chlorverbindungen,

Le A 23 197 - Ausland

zusammen mit synergistisch wirkenden Metalloxiden aus Gründen der Wirkung und Wirtschaftlichkeit vorwiegend Antimon(III)-oxid zuzusetzen. Für ausreichende Effekte besonders mit weniger wirksamen Metalloxiden als Antimon(III)-oxid, z.B. Zinn(IV)-oxid und Wismut(III)-oxid, sind jedoch bis zu 10 Gew.-% Metalloxid erforderlich, um Brandklasse V-2 bis V-0 nach UL 94 zu erreichen. Diese großen Mengen verschlechtern aber erfahrungsgemäß die mechanischen Eigenschaften der Kunststoffe.

Überraschend wurde gefunden, daß verhältnismäßig kleinen Mengen verschiedener Metalloxide, auch einiger, denen bislang nur eine geringe Wirkung zugeschrieben wurde, als Flammschutzmittel eine hohe Wirkung zukommt, wenn sie feinteilig auf organischen, halogenhaltigen Verbindungen abgeschieden und dann in Kunststoffe eingearbeitet werden.

Als in dieser Form hochwirksame Metalloxide kommen z.B. Antimon(III)-oxid, Blei(IV)-oxid, Cer(IV)-oxid, Kupfer(II)-oxid, Molybdän(VI)-oxid, Vanadium(V)-oxid, Wismut(III)-oxid, Wolfram(VI)-oxid, Zinn(IV)-oxid und Zirkon(IV)-oxid in Betracht, sowie deren Mischungen.

Es handelt sich also vorwiegend um Oxide von Metallen, die in der 4. und 5. Hauptgruppe und 4. bis 6. Nebengruppe des Perioden-Systems der Elemente stehen. Auf organischen, halogenhaltigen Verbindungen als Träger wird mit ihnen als Überzugsmaterial ein Brand-

Le A 23 197

- 3 -

schutz erhalten, der z.B. in ABS-Kunststoffen der Beurteilung V-2 oder V-0 nach der UL 94-Methode entspricht.

Besonderer Vorteil der Erfindung ist, daß durch die Verwendung der für einen effektiven Brandschutz unerläßlichen organischen Halogenverbindungen als Träger für
das Metalloxid im Prinzip kein zusätzliches Fremdmaterial dem Kunststoff zugesetzt werden muß.

Gegenstand der Erfindung sind demnach als Flammschutzmittel geeignete Zubereitungen, die durch Abscheiden
von wasserhaltigem Metalloxid auf einem organischen,
halogenhaltigen Trägermaterial, Auswaschen von anhaftendem Elektrolyten und anschließendes Erhitzen
erhalten werden, sowie deren Verwendung in Kunststoffen.

Es handelt sich also um Metalloxid-haltige Zubereitungen,
die als Flammschutzadditive für Kunststoffe dienen
können, und die dadurch gekennzeichnet sind, daß sich
das Metalloxid in einer Menge von 2 bis 20 Gewichtsprozent, bezogen auf die Gesamtmenge, als Oberflächenbelegung auf einer organischen, halogenhaltigen Verbindung als Trägermaterial befindet.

Der Gehalt eines mit dieser Zubereitung ausgerüsteten
Kunststoffes (Gesamtgemisch) an diesem Präparat ist
3 bis 25 Gew.-%. Die erfindungsgemäße Zubereitung
enthält somit mindestens einen Teil des erforderlichen halogenhaltigen
Flammschutzmittels. Dessen erforderliche Menge entspricht

Le A 23 197

dem Üblichen, d.h. der Gehalt an Halogen, bezogen auf den Kunststoff (Gesamtgemisch), ist ca. 10 bis 20 Gew.-%.

Für die Metalloxid-Zubereitung kommen als Träger prinzipiell alle organische Verbindungen mit an Kohlenstoff gebundenen Halogenatomen, vorwiegend Chlor und Brom, in Frage, die gegenüber dem Kunststoff inert sind, sich in Wasser nicht lösen und einen Schmelzpunkt über 100°C aufweisen. Geeignet sind halogenhaltige Verbindungen, die bereits seit langem in Kunststoffen für den Flammschutz verwendet werden.

Beispiele hierfür sind chlorierte Paraffine und bromierte Cycloaliphaten sowie chlorierte und bromierte Derivate von Benzol, Alkylbenzolen, Diphenylen, Diphenylether, Diphenylmethan, Bisphenoxiethern und Bisphthalimiden, ferner Umsetzungsprodukte von chlor- und bromhaltigen difunktionellen Verbindungen wie Hexachloroendomethylentetrahydrophthalsäure, Tetrachlor- bzw. Tetrabromphthalsäure und Tetrachlor- bzw. Tetrabrombisphenol A mit monofunktionellen Verbindungen wie Alkoholen, Phenolen und Aminen, die wiederum auch Halogenatome tragen können, wie Hexabromcyclododecan, Hexachlorbenzol, Hexabrombenzol, Pentabromtoluol, Pentabromethylbenzol, Octa- und Decabromdiphenyl, Hexabrom- bis Decabromdiphenylether, Hexabrombisphenoxiethan, Ethylenbistetrabromphthalimid und der Bis(dibrompropyl)ether des Tetrabrombisphenol A und ihre Gemische.

Diese Stoffe sollen feinteilig mit Korngrößen zwischen 1 und 50 μm vorliegen. Zur Herstellung der Zubereitung wird zweckmäßig das Trägermaterial in einer Flüssigkeit, in der es sich nicht löst, vorteilhaft in Wasser, suspendiert.

Die Metalle werden als Verbindung in saurer Lösung, z.B. als Chloride in Form einer wäßrig-salzsauren Lösung, zugegeben. Durch Neutralisation mit einer Base scheiden sich mehr oder weniger wasserhaltige Metalloxide auf dem Träger ab. Für die Neutralisation kommen Ammoniaklösung, Kali- und Natronlauge oder Alkalicarbonat-Lösungen in üblichen Konzentrationen in Betracht. Man darf nicht zu schnell neutralisieren, da sonst die Gefahr der unvollständigen Hydrolyse der Salze besteht. Nach einiger Zeit mit eventuell notwendigen Korrekturen des pH-Wertes kann der Feststoff abfiltriert, elektrolytfrei gewaschen, getrocknet und erhitzt werden. Die sauren Lösungen und die wäßrige Lösung der Base können auch gleichzeitig unter Beibehaltung des für die Fällung günstigsten pH-Wertes zugegeben werden.

Gegenstand der Erfindung sind auch thermoplastische Kunststoffe, die die erfindungsgemäßen Zubereitungen als Flammschutzmittel in den angegebenen Konzentrationen enthalten.

Besonders geeignet sind Thermoplasten wie Polystyrol, Co- und Pfropfpolymerisate mit Styrol, z.B. Styrol/

Le A 23 197

Acrylnitril-Copolymerisate, hochschlagfestes Polystyrol, Pfropfpolymerisate von Styrol, Acrylnitril und Kautschuken (vom ABS-Typ), Polyethylen, Polypropylen, Polyvinylchlorid, Polyacrylat, Polyester, aromatisches Polycarbonat, Polyamid, Polyurethan, Polysulfon, Polyphenylenoxid, Polyphenylensulfid oder auch Mischungen daraus, sowie duroplastische Kunststoffe, z.B. aus ungesättigten Polyesterharzen, Epoxidharzen und vernetzbaren Polyurethanrohstoffen.

Diese Kunststoffe können neben den erfindungsgemäßen Flammschutzmitteln weitere Flammschutzmittel (auch halogenhaltige) und falls erforderlich Zusätze wie Füllstoffe, Pigmente, und Glasfasern enthalten und/oder typische und notwendige Hilfsstoffe, z.B. Hitzestabilisatoren, Lichtschutzmittel, Antioxidantien, Gleit- und Schmierstoffe, Entformungsmittel und Farbstoffe. Als weitere Flammschutzmittel kommen Phosphorverbindungen in Betracht, wie Triphenylphosphat, Diphenylkresylphosphat, Methandiphenylphosphonat und Triphenylphosphit. Die Mengen liegen in den üblichen Bereichen.

Beispiele für typische Füllstoffe und Pigmente sind Glaskugeln, Quarzmehl, Kalk, Kreide, Leicht- und Schwerspat, Aluminiumhydroxid, Aluminiumoxid, Magnesium- und Aluminiumsilikate wie Glimmer, Talkum oder Kaolin, Aluminiumphosphat, Calciumphosphat, Zinkborat, Zinkoxid, Eisenoxid, Titandioxid, Kohlenstoff, z.B. als Graphit oder Ruß, sowie faserförmige Stoffe, z.B. Glasfasern.

Le A 23 197

Beispiel 1

Zu 0,5 1 Wasser werden 200,0 g Decabromdiphenylether (Teilchengröße < 10 µm) gegeben. Die auf 60°C erwärmte Suspension versetzt man daraufhin gleichzeitig in 1 Stunde mit einer Lösung aus 23,9 g Antimon(III)-oxid im Gemisch von 21,1 g Wasser und 64,7 g konzentrierter Salzsäure (37 %ig) sowie der Lösung aus 42,4 g Ammoniumcarbonat und 240,3 g Wasser und zwar so, daß der pH-Wert von 7,0 sich nicht verändert.

Die Nachreaktionszeit unter Kontrolle des pH-Wertes von 7,0 beträgt 2 Stunden. Anschließend wird nach Abkühlen der Feststoff abfiltriert und durch dreimaliges Aufschlämmen in 1 1 Wasser und Abfiltrieren das durch Neutralisation entstandene Kochsalz entfernt. Zunächst trocknet man das Produkt 15 Stunden lang bei 50°C, dann schließt sich eine 5 Stunden lange Behandlung bei 250°C an (jeweils im Vakuumtrockenschrank), um das restliche Wasser zu entfernen.

Der Antimongehalt des fertigen Präparats wird analytisch zu 9,2 % bestimmt. Er befindet sich vorwiegend als Antimon(III)-oxid auf der Oberfläche des Decabromdiphenylethers.

Zur Prüfung auf die Flammschutzwirkung des zuvor beschriebenen Trägerpräparats werden 218,3 g in 1081,7 g eines typischen ABS-Copolymerisats (Novodur PX der Bayer AG) auf einem Kneter bei 200-220° eingearbeitet. Das erhaltene Material wird

Le A 23 197

dann zu für den UL 94-Test geeigneten Prüfkörpern von
2,5 mm Dicke verarbeitet. Es enthält 1,5 % Antimon in
Form von Oxid und 12,5 % an Diphenylether gebundenes
Brom. Der UL 94-Test ergibt das Prüfergebnis V-0.

Beispiel 2

Zu 0,4 l Wasser werden 200,0 g Octabromdiphenylether
(Teilchengröße < 100 µm) gegeben. Die auf 80°C erwärmte Suspension versetzt man daraufhin gleichzeitig
in 1 Stunde mit einer Lösung aus 20,0 g Antimon(III)-
chlorid im Gemisch von 17,6 g Wasser und 53,9 g konzentrierter Salzsäure (37 %ig) und zwar so, daß der pH-
Wert von 7,0 sich nicht verändert. Die Nachreaktion
und Aufarbeitung erfolgen wie in Beispiel 1, allein
die Nachtrocknung erfolgt 5 Stunden bei 150°C.

Der Antimongehalt des fertigen Präparats wird analytisch zu 7,1 % bestimmt. Er befindet sich vorwiegend
als Antimon(III)-oxid auf der Oberfläche des Octabromdiphenylethers.

Zur Prüfung auf die Flammschutzwirkung des zuvor beschriebenen Trägerpräparats werden 257,4 g in 1042,6 g
eines typischen ABS-Copolymerisats (Novodur PX) auf
einem Kneter bei 200 - 220°C eingearbeitet und zu Prüfkörpern von 2,5 mm Dicke verarbeitet. Das Material
enthält 1,4 % Antimon in Form von Oxid und 14,5 % an
Diphenylether gebundenes Brom. Der UL 94-Test ergibt
das Prüfergebnis V-0.

Le A 23 197

### Beispiel 3

Zu 0,5 l Wasser werden 200,0 g Decabromdiphenylether (Teilchengröße < 10 µm) gegeben. Die auf 80°C erwärmte Suspension versetzt man daraufhin gleichzeitig in 1 Stunde mit einer Lösung aus 58,6 g Zinn(IV)-chlorid im Gemisch von 116,6 ml Wasser und 25,2 g konzentrierter Salzsäure (37 %ig) sowie 144,7 g Natronlauge (32 %ig) und zwar so, daß der pH-Wert von 4 sich nicht verändert. Die Nachreaktion (bei pH 4,5) und Aufarbeitung erfolgen wie in Beispiel 1.

Der Zinngehalt des fertigen Präparats wird zu 11,3 % bestimmt. Er befindet sich vorwiegend als Zinn(IV)-oxid auf der Oberfläche der Decabromdiphenylethers.

Zur Prüfung auf die Flammschutzwirkung des zuvor beschriebenen Trägerpräparats werden 90,5 g zuzüglich 117,5 Decabromdiphenylether in 1092 g eines typischen ABS-Copolymerisats (Novodur PX) auf einem Kneter bei 200 - 220°C eingearbeitet und zu Prüfkörpern von 2,5 mm Dicke verarbeitet. Das Material enthält 0,8 % Zinn in Form von Oxid und 12,5 % an Diphenylether gebundenes Brom. Der UL 94-Test ergibt das Prüfergebnis V-2.

Le A 23 197

Beispiel 4

Zu 0,4 l Wasser werden 200,0 g Octabromdiphenylether
(Teilchengröße < 100 µm) gegeben. Die auf 80°C erwärmte Suspension versetzt man daraufhin gleichzeitig
in 1 Stunde mit einer Lösung aus 48,8 g Zinn(IV)-
chlorid im Gemisch von 97,1 ml Wasser und 21,0 g
konzentrierter Salzsäure (37 %ig) sowie 119,2 g Natronlauge (32 %ig) und zwar so, daß der pH-Wert von 4
sich nicht verändert.

Die Nachreaktion (bei pH 4,5) und Aufarbeitung erfolgen wie in Beispiel 1, allein die Nachtrocknung
erfolgt 5 Stunden bei 150°C. Der Zinngehalt des fertigen Präparats wird zu 8,0 % bestimmt. Er befindet
sich vorwiegend als Zinn(IV)-oxid auf der Oberfläche
des Octabromdiphenylethers.

Zur Prüfung auf die Flammschutzwirkung des zuvor
beschriebenen Trägerpräparats werden 267,0 g in
1033,0 g eines typischen ABS-Copolymerisats
(Novodur PX) auf einem Kneter bei 200 - 220°C eingearbeitet und zu Prüfkörpern von 2,5 mm Dicke verarbeitet. Es enthält 1,6 % Zinn in Form von Oxid
und 14,7 % an Diphenylether gebundenes Brom. Der
UL 94-Test ergibt das Prüfergebnis V-0.

Le A 23 197

**Beispiel 5**

Zu 0,5 1 Wasser werden 200,0 Octabromdiphenylether (Teilchengröße < 100 μm) gegeben. Die auf 80°C erwärmte Suspension versetzt man daraufhin gleichzeitig in 1 Stunde mit einer Lösung aus 30,9 g Wismutnitrat, $Bi(NO_3)_3 \cdot 5H_2O$, im Gemisch aus 73,4 ml Wasser und 43,7 g konzentrierter Salzsäure sowie 71,2 g Natronlauge (32 %ig) und zwar so, daß der pH-Wert von 7 sich nicht verändert.

Die Nachreaktion (bei pH 7,5) und Aufarbeitung erfolgen wie in Beispiel 1, allein die Nachtrocknung erfolgt 5 Stunden bei 150°C. Der Wismutgehalt des fertigen Präparats wird zu 4,6 % bestimmt. Er befindet sich vorwiegend als Wismut(III)-oxid auf der Oberfläche des Octabromdiphenylethers.

Zur Prüfung auf die Flammschutzwirkung des zuvor beschriebenen Trägerpräparats werden 260,0 g in 1040,0 g eines typischen ABS-Copolymerisats (Novodur PX) auf einem Kneter bei 200 - 220°C eingearbeitet und zu Prüfkörpern von 2,5 mm Dicke verarbeitet. Er enthält 1,0 % Wismut in Form von Oxid und 15,1 % an Diphenylether gebundenes Brom. Der UL 94-Test ergibt das Prüfergebnis V-0.

Le A 23 197

Vergleichsbeispiele

Werden 195 bzw. 234 g Octa- oder Decabromdiphenylether mit 1105 bzw. 1066 g ABS-Copolymerisat (Novodur PX) zu einem homogenen Material gemischt und im Brandtest geprüft, so wird der UL 94-Test nicht bestanden.

Werden dagegen 1040 bzw. 1001 g ABS-Copolymerisat 65 g gleich 5 Gew.-% Antimon(III)-oxid, Zinn(IV)-oxid oder Wismut(III)-oxid und 195 bzw. 234 g Octa- oder Decabromdiphenylether zugefügt (Prüfkörper 2,5 mm dick), so kommen diesen Materialien in beiden Fällen Antimon(III)-oxid und im Fall Wismut(III)-oxid mit Decabromdiphenylether die Be-urteilung V-O sonst die Beurteilung V-2 nach UL 94 zu. Sie weisen aber den deutlich höheren Metallgehalt von über 4 % auf.

Le A 23 197

## Patentansprüche

1.  Feinteilige Metalloxid-haltige Zubereitung, dadurch gekennzeichnet, daß sich ein Metalloxid oder ein Gemisch aus ihnen in einer Menge von 2 bis 20 Gew.-% bezogen auf die Gesamtmenge, als Oberflächenbelegung auf einem organischen, halogenhaltigen Trägermaterial befindet.

2.  Feinteilige Metalloxid-haltige Zubereitung, dadurch gekennzeichnet, daß sich als Metalloxid Antimon(III)- oxid, Zinn(IV)-oxid oder Wismut(III)-oxid bzw. ein Gemisch aus ihnen in einer Menge von 2 bis 20 Gew.-%, bezogen auf die Gesamtmenge, als Oberflächenbelegung auf einem organischen, halogenhaltigen Trägermaterial befindet.

3.  Zubereitung nach Anspruch 1, dadurch gekennzeichnet, daß das Trägermaterial Hexabromcyclododecan, Octa- bromdiphenyl, Decabromdiphenyl, Octabromdiphenyl- ether, Decabromdiphenylether, Hexabrombisphenoxi- ethan, Ethylenbistetrabromphthalimid, auch ein technisches Produkt, sowie ein Gemisch aus ihnen ist.

4.  Verfahren zur Herstellung der Zubereitung nach Anspruch 1, dadurch gekennzeichnet, daß man ein organisches, halogenhaltiges Trägermaterial in Wasser suspendiert, eine Metall-Verbindung oder ein Gemisch

Le A 23 197

aus ihnen in Form einer sauren Lösung zugibt, die Mischung neutralisiert und die feste Zubereitung abtrennt, wäscht und trocknet.

5. Kunststoffe, enthaltend 3 - 25 Gew.-% der Zubereitung gemäß Anspruch 1 bis 3 als Flammschutzmittel.

6. Polyethylen, Polypropylen, Polyamid, Polyester, Polycarbonat, Polyurethan, Polyphenylenoxid, Polystyrol und Copolymerisate mit Styrol (SAN, ABS) oder deren Mischungen oder gehärtete ungesättigte Polyester oder Epoxidharze bzw. vernetzte Polyurethane enthaltend 3 - 25 Gew.-% der Zubereitung gemäß Ansprüchen 1 bis 3 als Flammschutzmittel.

7. Kunststoffe gemäß Ansprüchen 1 bis 6, zusätzlich enthaltend weitere halogenhaltige Verbindungen, Füllstoffe und Pigmente.

Le A 23 197